# EUROPÄISCHE PATENTSCHRIFT

(11) **EP 2 315 943 B1**
(45) Veröffentlichungstag und Bekanntmachung des Hinweises auf die Patenterteilung: **25.06.2014**
(21) Anmeldenummer: 09781707.6
(22) Anmeldetag: 11.08.2009
(51) Int. Cl.: F03D 7/02

(54) **VERSTELLEINRICHTUNG ZUM VERSTELLEN DER DREHWINKELPOSITION DES ROTORS EINER WINDENERGIEANLAGE**
ADJUSTING DEVICE FOR ADJUSTING THE ROTATION ANGLE POSITION OF THE ROTOR OF A WIND ENERGY SYSTEM
DISPOSITIF DE RÉGLAGE DESTINÉ À RÉGLER LA POSITION ANGULAIRE DU ROTOR D'UNE INSTALLATION ÉOLIENNE

(30) Priorität: 18.08.2008 DE 102008038128
(43) Veröffentlichungstag der Anmeldung: 04.05.2011
(73) Patentinhaber: Kenersys GmbH, 48155 Münster (DE)
(72) Erfinder: HÜSKEN, Michael, 48529 Nordhorn (DE); NOSTHOFF, Ulf, 48159 Münster (DE); UPHUES, Ulrich, 48431 Rheine (DE); BECKER, Markus, 48147 Münster (DE)
(74) Vertreter: Raffay & Fleck
(86) Internationale Anmeldenummer: PCT/EP2009/060389
(87) Internationale Veröffentlichungsnummer: WO 2010/020563

(56) Entgegenhaltungen:
- EP-A2- 1 167 755
- US-A1- 2008 181 761

## Beschreibung

### Technisches Gebiet

Die Erfindung betrifft eine Verstelleinrichtung zum Verstellen der Drehwinkelposition des Rotors einer Windenergieanlage.

### Stand der Technik

Bei Windenergieanlagen ist es insbesondere für Wartungs- und Reparaturzwecke häufig erforderlich, den Rotor der Anlage nicht nur anzuhalten, sondern in eine vorgegebene Drehwinkelposition zu bringen, bei der beispielsweise ein bestimmtes der Rotorblätter entlang des Turmes senkrecht nach unten zeigt.

Ein solches Verstellen kann beispielsweise durch Anbringen entsprechender Kraftübertragungsmittel an den Rotorblättern und Ziehen von außen geschehen, alternativ kann im Antriebsstrang eine der Wellen mechanisch gedreht und der Rotor in seiner Drehwinkelposition so verstellt werden.

In der EP 1 167 755 A2 ist bei einer Arretiervorrichtung für den Rotor einer Windkraftanlage, die eine mit Bremsbacken festzuhaltende, auf einer Welle in dem Antriebsstrang einer Windenergieanlage angeordnete, mit einer Außenverzahnung versehene Bremsscheibe und ein Eingriffsmittel zum in Eingriff bringen eines weiteren gezahnten Elementes mit der Außenverzahnung der Bremsscheibe zum zusätzlichen Arretieren der letztgenannten umfasst, vorgeschlagen, dass mittels der Außenverzahnung der Bremsscheibe und einem mit dieser Außenverzahnung in Eingriff bringbaren Ritzel auch ein aktives Drehen der Welle und damit ein Verstellen der Drehwinkelposition des Rotors einer Windenergieanlage ermöglicht werden soll. Hierzu ist ein entsprechendes Handwerkzeug in Form eines Drehmomentschraubers vorgesehen, welches in eine Innenverzahnung des Antriebsritzels eingesetzt werden und so das Antriebsritzel motorisch antreiben und damit über den Eingriff in die Außenverzahnung der Bremsscheibe die Bremsscheibe und so auch die Welle und den damit in Verbindung stehenden Rotor verdrehen kann.

Diese Lösung ist in verschiedener Hinsicht als problematisch und unzureichend zu bewerten. So ist das Einbringen einer Umfangsverzahnung in eine Bremsscheibe wegen der speziellen Härtung und Behandlung des Materials der Bremsscheibe kompliziert und erfordert ein erhöhtes Maß an Arbeitsaufwand und apparativem Einsatz. Ferner sind häufig in dem Bereich des den Antriebsstrang abdeckenden bzw. umgebenden Maschinengehäuses (der sogenannten Gondel) der Windenergieanlage, in welchem die Bremsscheibe angeordnet ist, die räumlichen Verhältnisse stark beengt. Insoweit besteht hier oftmals nicht einfach die Möglichkeit, ein zusätzliches Antriebsritzel und die Möglichkeit der Anbindung des Drehmomentschraubers vorzusehen. Schließlich gestattet die in der genannten Druckschrift offenbarte Lösung aufgrund der Verwendung eines von einer Bedienperson zwingend zu bedienenden Drehmomentschraubers keine ferngesteuerte Betätigung der so geschaffenen Verstelleinrichtung. Insoweit muss, wenn ein bestimmter Drehwinkel des Rotor angefahren werden soll, entweder die Person, die den Drehmomentschrauber bedient, den Verstellvorgang regelmäßig unterbrechen um durch Sichtkontrolle die aktuelle Drehwinkelposition des Rotors zu bestimmen und mit dem angestrebten Ergebnis abzugleichen, oder es muss eine zweite Person über eine geeignete Kommunikationsverbindung mit der den Drehmomentschrauber bedienenden Person in Verbindung stehen und ein entsprechendes Signal zum Anhalten des Drehmomentschraubers geben, wenn die gewünschte Drehwinkelposition des Rotors erreicht ist.

### Darstellung der Erfindung

Vor dem Hintergrund dieser erkannten Unzulänglichkeiten der bestehenden Lösung und zur Beseitigung der aufgezeigten Mängel soll mit der Erfindung eine verbesserte Verstelleinrichtung zum Verstellen der Drehwinkelposition des Rotors einer Windenergieanlage geschaffen und angegeben werden.

Erfindungsgemäß wird diese Aufgabe gelöst durch eine Verstelleinrichtung zum Verstellen der Drehwinkelposition des Rotors einer Windenergieanlage mit den Merkmalen des Patentanspruches 1. Vorteilhafte Weiterbildungen einer solchen Verstelleinrichtung sind in den abhängigen Ansprüchen 2 bis 15 angegeben.

Ein wesentlicher Aspekt und entscheidender Unterschied zu der in der EP 1 167 755 angegebenen Lösung, bei dem für den Eingriff eines Verstellantriebes eine Außenverzahnung in der Bremsscheibe der Windenergieanlage genutzt wurde, welche Außenverzahnung darüber hinaus einem Arretieren der Drehwinkelposition des Rotors diente, besteht erfindungsgemäß darin, auf einer Welle in dem Antriebsstrang ein Kraftaufnahmerad bzw. eine Kraftaufnahmescheibe als eigenständiges Bauteil anzuordnen. Es wird also anders als im Stand der Technik nicht etwa die aufgrund der besonderen Materialwahl und -behandlung nur schwer zu strukturierende und häufig an unzugänglicher Stelle im Antriebsstrang angeordnete Bremsscheibe genutzt, um eine Kraft zum Verdrehen des Rotors einzuleiten, sondern es wird zu diesem Zweck ein gesondertes und explizit dieser Verwendung vorbehaltenes Bauteil vorgesehen. Dieses kann nun im Antriebsstrang grundsätzlich frei auf einer Welle positioniert werden, es wird bevorzugt an einer Stelle angeordnet, in der im Maschinenhaus bzw. in der Gondel der Windenergieanlage noch ausreichend Raum zur Verfügung steht.

Das Kraftaufnahmerad bzw. die Kraftaufnahmescheibe ist für den Eingriff eines Kraftübertragungsmittels strukturiert. Dabei hängt die Struktur naturgemäß von der Art des Kraftübertragungsmittels ab, sie kann insbesondere eine Umfangsverzahnung sein (vgl. Anspruch 2).

Das erfindungsgemäß vorzusehende Kraftübertragungsmittel zum Übertragen der Antriebskraft des Antriebsmittels auf das Kraftaufnahmerad bzw. die Kraftaufnahmescheibe kann mit Vorteil eine an der Kraftaufnahmescheibe bzw. dem Kraftaufnahmerad angreifende Kette oder einen solchen Riemen, vorzugsweise einen Zahnriemen, enthalten (vgl. Anspruch 3). Eine solche Lösung erlaubt insbesondere dann, wenn die Kette bzw. der Riemen teilbar ausgeführt ist (vgl. Anspruch 4) ein einfaches Ankoppeln der Kraftaufnahmescheibe bzw. des Kraftaufnahmerades an das Antriebsmittel und Trennen derselben. Ein solches Ankoppeln bzw. Trennen ist insbesondere deshalb von Vorteil, wenn nicht gar erforderlich, da im Normalbetrieb der Windenergieanlage, wenn sich die Welle angetrieben durch den Rotor dreht, ein Mitdrehen des Kraftübertragungsmittels und insbesondere des Antriebsmittels nicht gewünscht ist, ja sogar schädlich sein kann.

Grundsätzlich ist es auch möglich, das Kraftübertragungsmittel unter Einsatz eines Antriebsritzels auszubilden, welches an der Kraftaufnahmescheibe bzw. an dem Kraftaufnahmerad angreift (vgl. Anspruch 5).

Je nach Ausgestaltung des Antriebsmittels kann es von Vorteil oder gar erforderlich sein, in dem Kraftübertragungsmittel ein Getriebe vorzusehen, insbesondere ein Über- bzw. Untersetzungsgetriebe.

Eine weitere Möglichkeit, die Verstelleinrichtung im Normalbetrieb der Windenergieanlage "neutral zu schalten" besteht darin, das Kraftaufnahmerad bzw. die Kraftaufnahmescheibe über eine Kupplung mit der Welle zu verbinden, die im Normalbetrieb der Windenergieanlage auskuppelt. Auch auf diese Weise ist sichergestellt, dass im Normalbetrieb der Windenergieanlage bei von dem Rotor angetrieben rotierender Welle im Antriebsstrang die Verstelleinrichtung nicht zwangsgedreht wird und Teile der Verstelleinrichtung, insbesondere deren Antriebsmittel, etwa Schaden nehmen.

Darüber hinaus ist es auch möglich, das Kraftaufnahmerad bzw. die Kraftaufnahmescheibe so auszugestalten, dass sie lösbar auf der Welle des Antriebsstranges anordbar ist, z.B. mittels eines Spannsatzes (vgl. Anspruch 8). So kann mit wenigen Handgriffen im Bedarfsfall das Kraftaufnahmerad bzw. Kraftaufnahmescheibe auf der Welle angeordnet und mit dieser drehfest verbunden werden, um dann mittels des Kraftübertragungsmittels und des Antriebsmittels eine Drehwinkelverstellung des Rotors vornehmen zu können.

Das Antriebsmittel kann einerseits fest in der Windenergieanlage, insbesondere in deren Gondel, installiert sein, z.B. in Form eines Antriebsmotors (vgl. Anspruch 9), es kann allerdings auch die Gestalt eines von einer beliebigen Person mitzuführenden, zum Gebrauch in der Windenergieanlage festlegbaren, insbesondere motorisch angetriebenen Werkzeuges aufweisen (vgl. Anspruch 10). Die erstgenannte Variante hat insbesondere den Vorteil, dass ein fest installierter Antrieb so ausgelegt werden kann, dass er hohe Drehmomente erzeugen und insoweit eine kraftvolle Verstellung der Rotorposition ermöglicht. Die zweitgenannte Variante bringt den Vorteil mit sich, dass für mehrere Windenergieanlagen nur eine begrenzte Zahl von Handwerkzeugen bereitzuhalten ist und dass ferner weniger Bauraum in der Gondel der Windenergieanlage permanent belegt ist.

Um zu verhindern, dass bei starker Gegenlast das Antriebsmittel überlastet wird und insoweit Schaden nimmt, kann dieses mit einer Überlastsicherung, insbesondere einer Drehmomentbegrenzung, die z.B. eine Rutschkupplung sein kann, ausgestattet ist (vgl. Anspruch 11).

Mit Vorteil ist das Antriebsmittel über eine Fernbedienung oder Fernüberwachung steuerbar (vgl. Anspruch 12). Dies erlaubt ein Betätigen des Antriebsmittels und damit ein Verstellen der Drehwinkelposition des Rotors aus einer Position heraus, in der eine Bedienperson Einblick zum Rotor der Windenergieanlage hat und insoweit das Anfahren einer gewünschten Position allein und zuverlässig und in einfacher Weise überwachen kann.

Um weitergehend automatisiert Drehwinkelpositionen des Rotors anfahren zu können, kann die Verstelleinrichtung entsprechend der Weiterbildung nach Anspruch 13 ausgebildet sein. Über die Steuereinrichtung, die Positionsdaten anhand der Rotorpositionssensoren erhält, kann das Antriebsmittel automatisch betätigt und zum Anfahren einer der Steuerung zuvor eingegebenen Rotorposition geschaltet werden.

Müssen für das Verdrehen des Rotors an der Welle im Antriebsstrang hohe Kräfte bzw. ein hohes Drehmoment angreifen, die von einem einzelnen Antriebsmittel nicht erzeugt oder von einem Kraftübertragungsmittel nicht mehr gehalten werden können, so können entweder parallel nebeneinander oder aber auch an verschiedenen Stellen innerhalb des Antriebsstranges mehrere Kraftaufnahmescheiben bzw. -Räder angeordnet und über eigene Kraftübertragungsmittel entweder mit einem gemeinsamen Antrieb oder mit einem jeweils eigenen Antrieb verbunden sein (vgl. Anspruch 14).

Bevorzugt wird die Kraftaufnahmescheibe bzw. das Kraftaufnahmerad auf einer Welle auf der schnellen Seite des Antriebsstranges, insbesondere auf der Getriebewelle oder der Generatorwelle, angeordnet bzw. ist dort anordbar. Eine Anordnung in diesem Bereich hat zweierlei Vorteil. Zum einen muss für eine Verstellung der Drehwinkelposition des Rotors auf diese Welle eine geringere Kraft bzw. ein geringeres Drehmoment aufgebracht werden als auf einer langsamen Welle zwischen Generator und Getriebe. Zum anderen ist häufig im Bereich dieser Welle innerhalb des Maschinenhauses bzw. der Gondel der Windenergieanlage ausreichend Bauraum zur Verfügung, um dort die zusätzlichen Bauteile anzuordnen und zugleich noch ein Bedienen derselben zu ermöglichen.

In einer weiteren Variante ist es auch denkbar, die erfindungsgemäße Verstelleinrichtung in umgekehrter Weise zu nutzen, um z.B. im Trudelbetrieb der Windenergieanlage dort eine Antriebskraft abzugreifen, z.B. für den Antrieb einer zusätzlichen Getriebepumpe oder sonstiger Aggregate, die einen Notlauf sicherstellen sollen.

### Kurze Beschreibung der Zeichnungen

Weitere Vorteile und Merkmale der Erfindung ergeben sich aus der nachfolgenden Beschreibung eines Ausführungsbeispiels anhand der beigefügten

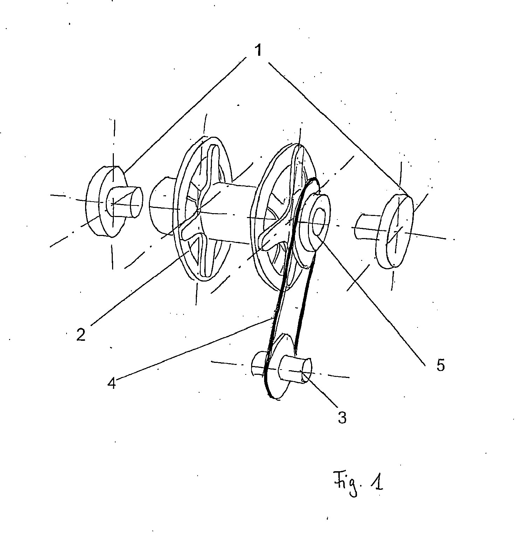

Fig. 1 Prinzipskizze einer erfindungsgemäßen Verstelleinrichtung.

### Weg(e) zur Ausführung der Erfindung

In der einzigen Figur Fig. 1 ist schematisch anhand einer Prinzipdarstellung in einem Ausführungsbeispiel das Prinzip der Erfindung und dabei eine erfindungsgemäße Verstelleinrichtung dargestellt und wird nachfolgend erläutert. Die erfindungsgemäße Verstelleinrichtung ist hier mit wesentlichen Teilen dargestellt, die im Bereich einer Welle 1 des Antriebsstranges einer Windenergieanlage angeordnet bzw. anordenbar sind. Die Welle 1 ist in diesem Ausführungsbeispiel eine schnell drehende Welle und befindet sich insoweit hinter einem Übersetzungsgetriebe, das die vergleichsweise geringe Drehzahl des Rotors übersetzt in die hohe Drehzahl, mit der die schnell drehende Welle angetrieben wird.

Mit 2 ist hier eine Kupplung bezeichnet, mittels derer die Welle 1 abgekuppelt und der Antriebsstrang insoweit unterbrochen werden kann. In diesem Ausführungsbeispiel ist im Bereich der Kupplung 2 auf der Welle 1 ein Kraftaufnahmerad 5 angeordnet bzw. kann dort angeordnet werden. Dabei ist es grundsätzlich unerheblich, ob das Kraftaufnahmerad 5 auf der Welle 1 in einem Abschnitt zwischen Kupplung und Generator angeordnet bzw. anordenbar ist oder auf einem Abschnitt der Welle 1 zwischen Kupplung und Getriebe. Die Positionierung des Kraftaufnahmerades 5 wird dort erfolgen, wo innerhalb des Antriebsstranges ausreichend Bauraum zur Verfügung steht, um nicht nur das Kraftaufnahmerad 5 anzuordnen, sondern auch noch ausreichend Raum für den Anschluss eines entsprechenden Antriebes bereitzustellen.

Weitere Bestandteile der erfindungsgemäßen Verstelleinrichtung in diesem Ausführungsbeispiel bilden ein von einem hier nicht näher dargestellten Antrieb antreibbares Kraftübertragungsrad 3 und ein zwischen dem Kraftübertragungsrad 3 und dem Kraftaufnahmerad 5 gespanntes Kraftübertragungsmittel 4, das hier die Form eines Riemens bzw. einer Kette aufweist.

Das Kraftaufnahmerad 5 kann (hier nicht näher dargestellt) über einen Kupplungsmechanismus auf der Welle 1 montiert sein, der ein Auskuppeln des Kraftaufnahmerades 5 und damit einen Freilauf desselben ermöglicht, wenn dieses nicht verwendet wird. Alternativ, und dies wird derzeit bevorzugt, ist das Kraftaufnahmerad 5 lösbar auf der Welle 1 anbring- bzw. anordbar, insbesondere vermittels eines Spannsatzes. In diesem Fall ist das als Riemen bzw. Kette ausgebildete Kraftübertragungsmittel 4 teilbar gebildet, damit es nach erfolgter Montage des Kraftaufnahmerades 5 mit Hilfe des Spannsatzes um das Kraftübertragungsrad 3 und das Kraftaufnahmerad 5 herumgeführt und zu einem geschlossenen Riemen bzw. einer geschlossenen Kette zusammengesetzt werden und nach Gebrauch entsprechend wieder gelöst und entfernt werden kann.

Das Kraftübertragungsrad 3 ist in einer hier nicht näher dargestellten Lagerung mit vorgegebenen Abstand zur Welle 1 gelagert und wird entweder mechanisch, z.B. über eine Kurbel oder dgl. oder aber motorisch, z.B. über einen mobilen motorischen Antrieb oder einen fest installierten Motor angetrieben.

Soll die Rotorposition z.B. für die Durchführung von Wartungsarbeiten an einem bestimmten Rotorblatt verstellt werden, wird das Kraftaufnahmerad 5, sofern es nicht fest auf der Welle 1 montiert ist, dort angeordnet, z.B. mittels des Spannsatzes, bzw. es wird, sofern es auskuppelbar ist, eingekuppelt, und das Kraftübertragungsmittel 4 wird angebracht und gespannt. Sodann wird auf das Kraftübertragungsrad 3 eine entsprechende Antriebskraft ausgeübt, sodass über das Kraftübertragungsmittel 4 und das Kraftaufnahmerad 5 die Welle 1 verdreht wird. Um hier einen Schlupf des Kraftübertragungsmittels 4 zu vermeiden, ist das Kraftaufnahmerad 5 entsprechend strukturiert, insbesondere mit einer Umfangsverzahnung versehen. Selbiges gilt dann für das Kraftübertragungsrad 3. Das Kraftübertragungsmittel 4 kann als Kette oder Zahnriemen in die Umfangsverzahnungen eingreifen und sorgt so für eine schlupffreie Übertragung der Antriebskraft.

Da das Kraftaufnahmerad 5 bevorzugt auf der schnell laufenden Welle des Antriebsstranges angeordnet ist, kann mit einem vergleichsweise kleinen Drehmoment der Rotor bewegt und in seiner Position verstellt werden.

Die erfindungsgemäße Verstelleinrichtung ist flexibel in der Handhabung und kann kostengünstig hergestellt werden. Insbesondere ist die Herstellung eines Kraftaufnahmerades kostengünstiger als eine Umfangsbearbeitung einer Bremsscheibe in dem Antriebsstrang der Windenergieanlage. Darüber hinaus kann das Kraftaufnahmerad 5 als gesondertes Bauteil beliebig auf der Welle 1 positioniert werden und ist nicht von der Position der Bremse abhängig. So kann die Verstelleinrichtung in einem Bereich vorgesehen sein, der ausreichend Bauraum und Platz für die Bedienung bereit hält.

Die Prinzipdarstellung in Fig. 1 ist stark schematisch und dient lediglich der Erläuterung. Insbesondere sind auch andere Ausgestaltungen denkbar. So kann anstelle eines in der Skizze als Riemen bzw. Kette dargestellten Kraftübertragungsmittels eine Kraftübertragung von dem Kraftübertragungsrad 3 auf das Kraftaufnahmerad 5 mittels eines Getriebes und ineinandergreifender Ritzel vorgesehen sein, auch kann das Kraftübertragungsrad 3 direkt mit einer entsprechenden Umfangsverzahnung des Kraftaufnahmerades 5 kämmen und so für eine Übertragung der Antriebskraft sorgen.

### Bezugszeichenliste

1 Welle
2 Kupplung
3 Kraftübertragungsrad
4 Kraftübertragungsmittel
5 Kraftaufnahmerad

## Patentansprüche

1. Verstelleinrichtung zum Verstellen der Drehwinkelposition des Rotors einer Windenergieanlage mit wenigstens einem auf einer Welle (1) des dem Rotor nachgeschalteten Antriebsstranges montierten oder montierbaren, für den Eingriff eines Kraftübertragungsmittels (4) strukturierten Kraftaufnahmerades (5) bzw. einer solchen Kraftaufnahmescheibe, mit einem Antriebsmittel zum Erzeugen einer Antriebskraft und mit wenigstens einem Kraftübertragungsmittel (3) zum Übertragen der Antriebskraft auf das Kraftaufnahmerad (5) bzw. die Kraftaufnahmescheibe, **dadurch gekennzeichnet, dass** das Kraftaufnahmerad (5) bzw. die Kraftaufnahmescheibe als eigenständiges Bauteil ausgebildet ist, dass das wenigstens eine Kraftübertragungsmittel (4) eine an dem Kraftaufnahmerad (5) bzw. der Kraftaufnahmescheibe angreifende Kette oder einen solchen Riemen, vorzugsweise einen Zahnriemen, enthält und dass die Kette oder der Riemen teilbar ausgeführt ist.

2. Verstelleinrichtung nach Anspruch 1, **dadurch gekennzeichnet, dass** das Kraftaufnahmerad (5) bzw. die Kraftaufnahmescheibe mit einer Umfangsverzahnung versehen ist.

3. Verstelleinrichtung nach einem der vorhergehenden Ansprüche, **dadurch gekennzeichnet, dass** das Kraftübertragungsmittel ein Getriebe enthält.

4. Verstelleinrichtung nach einem der vorhergehenden Ansprüche, **dadurch gekennzeichnet, dass** das Kraftaufnahmerad (5) bzw. die Kraftaufnahmescheibe über eine Kupplung mit der Welle (1) verbunden ist, die im Normalbetrieb der Windenergieanlage auskuppelt.

5. Verstelleinrichtung nach einem der vorhergehenden Ansprüche, **dadurch gekennzeichnet, dass** das Kraftaufnahmerad (5) bzw. die Kraftaufnahmescheibe lösbar auf der Welle (1) anordbar ist, insbesondere mittels eines Spannsatzes.

6. Verstelleinrichtung nach einem der vorhergehenden Ansprüche, **dadurch gekennzeichnet, dass** das Antriebsmittel ein fest in der Windenergieanlage, insbesondere in der Gondel, installierter Antriebsmotor ist.

7. Verstelleinrichtung nach einem der Ansprüche 1 bis 5, **dadurch gekennzeichnet, dass** das Antriebsmittel ein von einer Bedienperson mitzuführendes, zum Gebrauch in der Windenergieanlage festlegbares, insbesondere motorisch angetriebenes Werkzeug ist.

8. Verstelleinrichtung nach einem der vorhergehenden Ansprüche, **dadurch gekennzeichnet, dass** das Antriebsmittel mit einer Überlastsicherung, insbesondere einer Drehmomentbegrenzung, vorzugsweise einer Rutschkupplung, ausgestattet ist.

9. Verstelleinrichtung nach einem der vorhergehenden Ansprüche, **dadurch gekennzeichnet, dass** das Antriebsmittel über eine Fernbedienung oder Fernüberwachung steuerbar ist.

10. Verstelleinrichtung nach einem der vorhergehenden Ansprüche, **dadurch gekennzeichnet, dass** ein Drehwinkelpositionssensor zur Bestimmung des Drehwinkels des Rotors vorgesehen ist, der mit einer Steuereinheit für das Antriebsmittel derart verbunden ist, dass die Verstelleinrichtung gesteuert von der Steuerung eine von dem Rotorpositionssensor erfasste, vorgegebene Rotorposition anfahren kann.

11. Verstelleinrichtung nach einem der vorhergehenden Ansprüche, **dadurch gekennzeichnet, dass** sie parallel geschaltete zumindest zwei auf der Welle (1) angeordnete Kraftaufnahmescheiben oder -räder (5) sowie zumindest zwei Kraftübertragungsmittel (4), eines für jede Kraftaufnahmescheibe bzw. jedes Kraftaufnahmerad (5), aufweist.

12. Verstelleinrichtung nach einem der vorhergehenden Ansprüche, **dadurch gekennzeichnet, dass** das wenigstens eine Kraftaufnahmerad (5) bzw. die wenigstens eine Kraftaufnahmescheibe auf einer Welle (1) auf der schnellen Seite des Antriebsstranges, insbesondere auf der Getriebewelle oder der Generatorwelle, angeordnet bzw. anordbar ist.

## Claims

1. An adjustment device for adjusting the rotary angular position of the rotor of a wind power plant having at least one force sensor wheel (5) - or such a force sensor disc - which is mounted or can be mounted on a shaft (1) of the drive train connected downstream of the rotor, structured for meshing into a force transmission means (4), having a drive means for generating a driving force and having at least one force transmission means (3) for transmitting the driving force to the force sensor wheel (5) or the force sensor disc, **characterised in that** the force sensor wheel (5) or the force sensor disc is designed as a stand-alone component, that said at least one force transmission means (4) contains a chain or such a belt, preferably a toothed belt, meshing into the force sensor wheel (5) or the force sensor disc and that the chain or the belt is designed dividable.

2. An adjustment device according to claim 1, **characterised in that** the force sensor wheel (5) or the force sensor disc is provided with a peripheral toothing.

3. An adjustment device according to any one of the preceding claims, **characterised in that** the force transmission means includes a transmission.

4. An adjustment device according to any one of the preceding claims, **characterised in that** the force sensor wheel (5) or the force sensor disc is connected to the shaft (1) via a coupling, which disengages in normal operation of the wind power plant.

5. An adjustment device according to any one of the preceding claims, **characterised in that** the force sensor wheel (5) or the force sensor disc can be arranged removably on the shaft (1), in particular by means of a clamping set.

6. An adjustment device according to any one of the preceding claims, **characterised in that** the drive means is a drive motor installed fixedly in the wind power plant, in particular in the gondola.

7. An adjustment device according to one of the claims 1 to 5, **characterised in that** the drive means is a tool, in particular driven by a motor, controlled by an operator, which can be set for use in the wind power plant.

8. An adjustment device according to any one of the preceding claims, **characterised in that** the drive means is fitted with an overload protection system, in particular a torque limiter, preferably a friction coupling.

9. An adjustment device according to any one of the preceding claims, **characterised in that** the drive means can be operated via a remote control or a remote supervision.

10. An adjustment device according to any one of the preceding claims, **characterised in that** a rotational angle position sensor is provided for determining the rotational angle of the rotor, which is connected to a control unit for the drive means in such a way That the adjustment device, operated by the control unit, can trigger a preset rotor position, detected by the rotor position sensor.

11. An adjustment device according to any one of the preceding claims, **characterised in that** it has at least force sensor discs or wheels (5) arranged on the shaft (1), connected in parallel, as well as at least two force transmission means (4), one for each force sensor disc or each force sensor wheel (5).

12. An adjustment device according to any one of the preceding claims, **characterised in that** said at least one force sensor wheel (5) or said at least one force sensor disc is arranged or can be arranged on a shaft (1) on the fast side of the drive train, in particular on the transmission shaft or the generator shaft.

## Revendications

1. Système de réglage permettant de régler la position d'angle de rotation du rotor d'une installation éolienne comportant au moins une roue de capteur de force (5) montée ou montable sur un arbre (1) du train d'entraînement prévu en aval du rotor, structurée pour l'engrènement d'un moyen de transmission de force (5), ou bien un disque de capteur de force adéquat, comportant un moyen d'entraînement permettant de générer une force d'entraînement et comportant au moins un moyen de transmission de force (3) permettant de transmettre la force d'entraînement à la roue de capteur de force (5) ou au disque de capteur de force, **caractérisé en ce que** la roue de capteur de force (5) ou le disque de capteur de force est constitué comme élément autonome, que ledit au moins un moyen de transmission de force (4) contient une chaîne engrenant sur la roue de capteur de force (5) ou le disque de capteur de force, ou bien contenant une courroie adaptée, de préférence une courroie dentée et que la chaîne ou la courroie est conçu de manière divisible.

2. Système de réglage selon la revendication 1, **caractérisé en ce que** la roue de capteur de force (5) ou bien le disque de capteur de force est pourvu d'une denture périphérique.

3. Système de réglage selon l'une des revendications précédentes, **caractérisé en ce que** le moyen de transmission de force contient une transmission.

4. Système de réglage selon l'une des revendications précédentes, **caractérisé en ce que** la roue de capteur de force (5) ou le disque de capteur de force est relié à l'arbre (1) par un accouplement, qui débraye en mode d'exploitation normale de l'installation éolienne.

5. Système de réglage selon l'une des revendications précédentes, **caractérisé en ce que** la roue de capteur de force (5) ou le disque de capteur de force peut être agencé sur l'arbre (1) de manière amovible, en particulier à l'aide d'un dispositif de blocage.

6. Système de réglage selon l'une des revendications précédentes, **caractérisé en ce que** le moyen d'entraînement est un moteur d'entraînement installé à demeure dans l'installation éolienne, en particulier dans la gondole.

7. Système de réglage selon l'une des revendications 1 à 5, **caractérisé en ce que** le moyen d'entraînement est un outil commandé par un opérateur, que l'on peut installer pour utilisation dans l'installation éolienne, outil en particulier entraîné par un moteur.

8. Système de réglage selon l'une des revendications précédentes, **caractérisé en ce que** le moyen d'entraînement est équipé d'une sécurité de surcharge, en particulier un limiteur de couple, de préférence un accouplement à friction.

9. Système de réglage selon l'une des revendications précédentes, **caractérisé en ce que** le moyen d'entraînement est opérable par une commande à distance ou système de surveillance à distance.

10. Système de réglage selon l'une des revendications précédentes, **caractérisé en ce qu'**un capteur de position d'angle de rotation est prévu pour déterminer l'angle de rotation du rotor, qui est relié à une unité de commande pour le moyen d'entraînement de telle sorte que le système de réglage, guidé par le système de commande, peut faire démarrer une position de rotor prédéterminée, détectée par le capteur de position de rotor.

11. Système de réglage selon l'une des revendications précédentes, **caractérisé en ce qu'**il présente au moins deux disques ou des roues (5) disposés sur l'arbre (1), connectés en parallèle, de même qu'au moins deux moyens de transmission de force (4), un pour chaque disque de capteur de force ou chaque roue de capteur de force (5).

12. Système de réglage selon l'une des revendications précédentes, **caractérisé en ce que** ladite au moins une roue de capteur de force (5) ou bien ledit au moins disque de capteur de force est disposé ou peut être disposé sur un arbre (1) sur le côté rapide du train d'entraînement, en particulier sur l'arbre de transmission ou l'arbre de générateur.
